# EUROPEAN PATENT APPLICATION

(11) **EP 4 621 685 A1**
(43) Date of publication of application: **24.09.2025**
(21) Application number: 24165512.5
(22) Date of filing: 22.03.2024
(51) Int. Cl.: G06Q 30/015, G06Q 30/0601, H04L 51/02

(54) **AUTOMATIC NETWORK ADAPTION**

(71) Applicant: Barclays Execution Services Limited, London, Greater London E14 5HP (GB)
(72) Inventor: TYAGI, Himanshu, 411014 Pune (IN); PADHIYAR, Dhruv, 411014 Pune (IN); SINGH, Mritunjay, 411014 Pune (IN)
(74) Representative: Carpmaels & Ransford LLP

(57) **Abstract**

There is provided a computer-implemented method for adapting a network. The network may comprise a plurality of network nodes, at least one network connection, and at least one identifier. Each network connection connects two network nodes. At least one of the network nodes may be a target node. Each identifier may be associated with at least one of the network nodes. A path taken by a user through the network comprises at least one of the network nodes. The network nodes comprised in the path may be selected base don comparing at least one user input with data pertaining to the at least one identifier. The computer-implemented method may comprise receiving data representative of network nodes comprised in the path. The method may comprise determining, based on the data, whether the path comprises at least one target node. If the path does not comprise at least one target node, the method may comprise adapting the network.

## Description

### Technical Field

The invention relates generally to a computer-implemented method of adapting a network. The invention also relates to a computer program configured to carry out the method, and to a non-transitory computer readable medium comprising instructions that, when executed by a processor, cause the processor to implement the method.

### Background

Across a very diverse range of sectors, including telecommunications, finance, and leisure, chatbots are a powerful tool to allow user requests to be handled efficiently. Using a similar approach to those taken in database searching, these bots generally take a series of user inputs and result in a specific action being taken in response.

A conventional chatbot is often underpinned by a network of nodes, through which the user takes a path by travelling one-by-one along certain nodes which are selected based on the series of inputs made by the user. The network includes one or more target nodes, which are end points for the user's path and which may each result in a specific action being taken.

Since they often operate within set boundaries and can give rise to only certain specific actions in response to the user inputs, conventional chatbots avoid some of the shortcomings of chatbots that are based on large language models, such as hallucinations or other inaccuracies. In general, by using a chatbot to process the user's request as well as determine the resulting specific action, the need for intervention by human operators is reduced and efficiency is therefore increased.

However, using a network whose structure is fixed means that not all user requests can be handled correctly. For example, some user paths may not reach a target node, and may instead terminate elsewhere in the network. In that scenario, a conventional chatbot may be unable to provide a specific action and must instead request the intervention of a human operator. In these instances, some of the efficiency gains achieved by using the chatbot are undone. Accordingly, it is desirable to provide a means of adapting the network to decrease the rate at which a human operator is required to intervene to assist a user, without using a large language model. A benefit of such a means is more effective handling of user requests, accompanied by a corresponding improvement in efficiency, whilst avoiding hallucinations and other inaccuraries.

### Summary

The present invention is defined by the independent claims, with further optional features being defined by the dependent claims.

In a first aspect of the invention, there is provided a computer-implemented method for adapting a network. The network comprises a plurality of network nodes, at least one network connection and at least one identifier. Each network connection connects two network nodes. At least one of the network nodes is a target node. Each identifier is associated with at least one of the network nodes. A path taken by a user through the network comprises at least one of the network nodes. The network nodes comprised in the path are selected based on comparing at least one user input with data pertaining to the at least one identifier. The computer-implemented method comprises receiving data representative of network nodes comprised in the path, determining, based on the data, whether the path comprises at least one target node, and if the path does not comprise at least one target node, adapting the network. Failure to reach a target node can indicate that the network did not successfully allocate the user inputs. Hence, by adapting the network if the user's path through the network does not reach a target node, the claimed method results in a flexible network that is tailored to user inputs, allowing it to handle a wider range of user requests. Hence, the network performs its task more effectively.

If the path does not comprise at least one target node, the computer-implemented method may further comprise receiving data indicative of the user inputs and determining a final user input based on the data indicative of the user inputs. The method may further comprise calculating a parameter indicative of an accuracy of the selecting the network nodes comprised in the path based on at least one of the data representative of network nodes comprised in the path and the data indicative of the user inputs. The method may further comprise adapting the network based on at least one of the data representative of network nodes comprised in the path, the data indicative of the user inputs, the final user input, and the parameter. In this aspect, the adaptation is based on specific information regarding the user's path through the network. By basing the adaptation on data representative of network nodes comprised in the path (which define the path), data indicative of the user's inputs (which dictate the path), the final user input (which is the point at which the user's route failed, given that the path does not include a target node), and the accuracy parameter (which illustrates how well the user's queries were addressed by the network), the adaptation is focussed and specific to the problem encountered by each particular user.

If the path comprises at least one target node, the computer-implemented method may further comprise receiving data indicative of the user inputs. The method may further comprise calculating a parameter indicative of an accuracy of the selecting the network nodes comprised in the path based on at least one of the data representative of network nodes comprised in the path and the data indicative of user inputs. The method may further comprise adapting the network based on at least one of the data representative of network nodes comprised in the path, the data indicative of user inputs, and the parameter. Even if the user reached a target node, their query may not have been answered correctly. This aspect addresses this scenario, and provides network adaptation even if the user had otherwise navigated a "successful" path (i.e. one reaching a target node) through the network. This further optimises the performance of the network.

Adapting the network may comprise at least one of modifying at least one of the at least one identifiers, modifying the association between at least one of the at least one identifiers and at least one of the network nodes, adding at least one network node to the network, removing at least one node from the network, adding at least one network connection to the network, and removing at least one network connection from the network. The network can be adapted in several different ways. These include changing the identifiers themselves, which dictate how the user inputs are assigned to the network nodes. The change can also be to the association between the identifiers and the network nodes, which also alters the path taken by a user through the network. Lastly, entirely new network nodes can be added to the network. By providing this degree of flexibility in how the network is adapted, problems or shortcomings in the network can be addressed more effectively.

The network nodes may each be assigned to one of at least one level. Network nodes within the same level may not be directly connected to each other. Organising the nodes in this way, in a tree-like formation, allows a user to advance forwards through the network via a series of branched junctions. This makes the network simpler but preserves its effectiveness.

The at least one network node that is a target node may have a single network connection. Connecting each of the target nodes to a single other network node ensures that a user's path is decided unambiguously, which leads to more accurate routing through the network.

The network nodes may comprise a preselected node. The method may comprise receiving data representative of network nodes comprised in at least two paths. The method may further comprise determining a rate at which the at least two paths include the preselected node. If the rate exceeds a predefined rate threshold, the method may further comprise adapting the network. The preselected node may be a node that corresponds to a scenario where the user's query does not match with any of the other nodes. Passing through the preselected node may, therefore, be an indicator that the user's inputs are not being adequately accommodated by the network. By tracking how often this is occurring, and adapting the network if the occurrences are happening with a frequency above a threshold, the network can be improved further.

The method may further comprise generating an adapted path based on applying the user inputs to the adapted network, determining whether the adapted path comprises at least one of the target nodes. The method may further comprise calculating an adapted parameter indicative of an accuracy of the selecting the network nodes comprised in the adapted path. The method may further comprise comparing the adapted parameter to the parameter. If the adapted parameter is indicative of lower accuracy than the parameter and/or if the adapted path does not comprise at least one of the target nodes and the path comprises at least one of the target nodes, the method may further comprise either reversing the adaptation of the network or adapting the network. By checking whether the adapted network handles the user inputs more accurately than the previous network and whether the user inputs now lead to the path not reaching a target node, the method makes it possible to detect and reverse detrimental adaptations. However, the method is also able to move past local optima towards a global optima by implementing further adaptation of the network even in the scenarios above of apparent worsened performance.

Comparing the user input with data pertaining to the at least one identifier may comprise applying a trained model to the user input and the data pertaining to the at least one identifier. Allocating inputs to network nodes using a trained model increases the accuracy of the allocation.

The at least one identifier may comprise text. The user inputs may comprise text.

The selecting at least one of the network nodes comprised in the path based on the comparison of the user input and the data pertaining to the at least one identifier may comprise determining a similarity parameter for at least one of the network nodes. The similarity parameter may be indicative of a similarity between the user input and the data pertaining to the identifier associated with the at least one network node. Determining similarity in a quantitative manner ensures that the network performs reliably.

The method may further comprise selecting one of the network nodes based on the similarity parameter of the one of the network nodes exceeding a predefined similarity threshold. Allocating user inputs to network nodes based on the similarity between the input and the data pertaining to the identifier of the node being above a threshold ensures that if a minimum accuracy is not met then the allocation is not made.

Determining a similarity parameter for at least one of the network nodes may further comprise determining a similarity parameter for each of at least two of the network nodes. The method may further comprise selecting one of the network nodes based on the similarity parameter of the one of the network nodes being greater than the at least one similarity parameter of the at least one other of the network nodes. Selecting the most similar identifier for matching leads to more accurate handling of user inputs.

In a second aspect of the invention, there is provided a computer program configured to carry out the method of the first aspect of the invention.

In a third aspect of the invention, there is provided a non-transitory computer readable medium comprising instructions that, when executed by a processor, cause the processor to implement the method of the first aspect of the invention.

### Brief Description of the Drawings

Embodiments of the invention are described below, by way of example, with reference to the following drawings, in which:
Fig. 1A shows a computing device in which the methods of the invention may be implemented. Fig. 1B shows components of the system memory of the computing device of Fig. 1A in further detail. Fig. 1C shows components of the storage media of the computing device of Fig. 1A.
Fig. 2 shows a computing environment in which the methods of the invention may be implemented.
Figs. 3A, 3B and 3C show examples of networks which may be adapted using the methods of the invention.
Fig. 4A and 4B show example flow diagrams of methods of the invention.
Fig. 5 shows an example of the network of Fig. 3B after being adapted using methods of the invention.
Figs. 6A, 6B and 6C depict an example of a trained model for use with the invention.
Fig. 7A and Fig. 7B show an applied example of data preparation and use of the trained model of Fig. 6A to Fig. 6C.

### Detailed Description

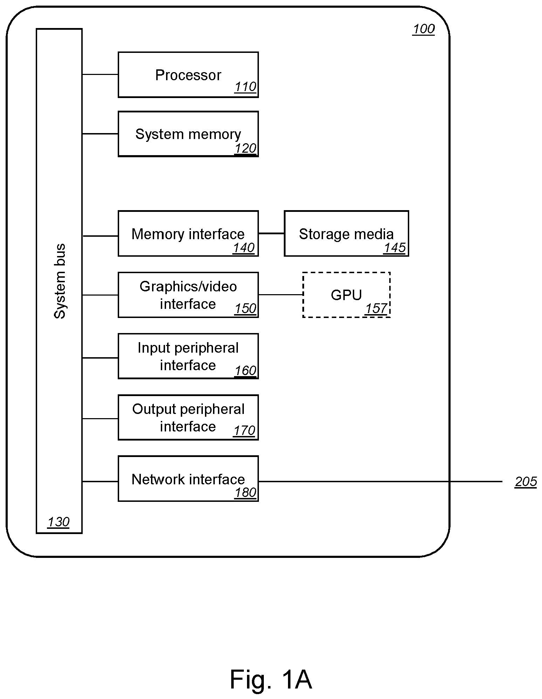

Fig. 1A shows an example computing device 100 in which the methods of the invention may be implemented. Computing device 100 may be embodied as any type of computer, including a server, a desktop computer, a laptop, a tablet, a mobile device, or the like.

Components of computing device 100 include, but are not limited to, a processor 110, such as a central processing unit (CPU), system memory 120, and system bus 130. System bus 130 provides communicative coupling for various components of computing device 100, including system memory 120 and processor 110. System bus 130 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 130 is formed of volatile and/or non-volatile memory such as read only memory (ROM) and random-access memory (RAM). ROM is typically used to store a basic input/output system (BIOS), which contains routines that boots the operating system and sets up the components of computing device 100, for example at start-up. RAM is typically used to temporarily store data and/or program modules that the processor 110 is operating on.

Computing device 100 includes other forms of memory, including (computer readable) storage media 145, which is communicatively coupled to the processor 110 through a memory interface 140 and the system bus 130. Storage media 145 may be or may include volatile and/or non-volatile media. Storage media 145 may be or may include removable or non-removable storage media. Storage media 145 may be within computing device 100 or external to computing device 100. Examples storage media 145 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 145 may be stored according to known methods of storing information such as computer readable instructions, data structures, program modules or other data, the form of which is discussed further herein.

In some embodiments, computing device 100 is communicatively coupled to an external display device via a graphics/video interface 150 and system bus 130. Alternatively, computing device 100 may have an integrated display (not shown) which is communicatively coupled via the graphics/video interface 150 and system bus 130. Optionally, a graphical processing unit 157 (GPU) may be used in addition to improve graphical and other types of processing.

Computing device 100 also includes an input peripheral interface 160 and an output peripheral interface 170 that are communicatively coupled to the system bus 130. Input peripheral interface is communicatively coupled to one or more input devices, for interaction between the computing device 100 and a human operator. Example input devices includes a keyboard, a mouse, a touchscreen, and a microphone. In some embodiments, the touchscreen and display may use the same screen. Output peripheral interface 170 is communicatively coupled to one or more output devices. Example output devices includes speakers and a printer. The communicative coupling may be wired, such as via a universal serial bus (USB) port, or wireless, such as over Bluetooth.

Computing device 100 operates in a networked or distributed environment using at least one communication network 205 to one or more remote computers. The one or more remote computers may be a personal computer, a server, a router, a peer device, a mobile device, a tablet, or other common network node, and typically includes many or all of the components described above relative to computer system 100. The at least one communication network 205 typically includes at least the Internet. Other communication networks 205 may be used including a local area network (LAN) and/or a wide area network (WAN). Further communication networks may be present in various types of computing device 100, such as mobile devices and tablets, to cellular networks, such as 3G, 4G LTE and 5G. Computing device 100 establishes communication with network environment 200 through network interface 180. In a networked environment, program modules depicted relative to computer system 100, or portions thereof, may be stored in the remote memory storage device.

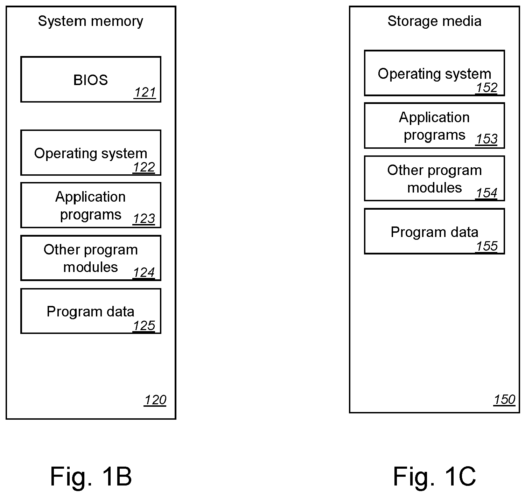

As shown in Fig. 1B, a number of program modules are stored on the system memory 120, including an operating system 122, one or more application programs 123, other program modules 124, and program data 125. Similarly, as shown in Fig. 1C, storage media 150 stores one or more application programs 153, other program modules 154, and program data 155.

In one implementation, the methods of the invention may be implemented as an application program 123 that is stored in storage media 150. The advantage of implementing the methods of the invention in this way is that the application program 123 can be implemented on existing computing systems 100. However, in general, when implemented this way, the application program 123 usually has to be manually chosen to process processing tasks. The input dataset 25 may be received via network interface 190 and stored in the storage media 150. The output dataset 27 may be sent elsewhere via network interface 190. The processing of the steps in between are performed by processor 110 in conjunction with the application program 123. System memory 120 may be used to store temporary or transitory data relating to the application program 123.

In another implementation, the methods of the invention may be implemented in the operating system 122 that is stored on system memory 120.

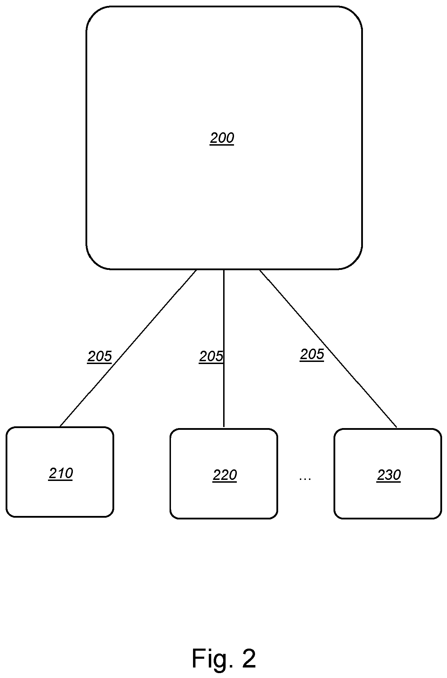

Fig. 2 is a schematic illustrating a further example system for implementing methods of the invention. As shown in Fig. 2, computing environment 200 is communicatively coupled via communication network 205 to one or more user devices 210, 220, 230. The user devices 210, 220, 230 interface between a user and the computing environment 200 so that the user can interact with a chatbot hosted by the computing environment 200. Communication network 205 is the same as described with respect to Fig. 1A. Preferably, communication network 205 may utilise encryption (e.g., Secure Sockets Layer) to secure data being transferred over the communication network 205 to the computing environment 200.

User devices 210, 220, 230 are configured in the same way as the computing device 100 discussed with respect to Fig. 1A, Fig. 1B and Fig. 1C. Computing environment 200 may also be configured in the same way as the computing device 100. However, more complicated implementations, such as a cloud computing environment, are possible. In some embodiments, the user devices 210, 220, 230 take the form of mobile devices, whilst the computing environment 200 takes the form of a server or cloud computing environment. In such embodiments, the user devices 210, 220, 230 may have an application program (i.e. application programs 123 of Fig. 1A), such as a specific chatbot application or a general purpose application such as a web browser, that is used to access the chatbot which is hosted on the computing environment 200. In other embodiments, the user devices 210, 220, 230 take the form of a desktop or laptop computer, in which case a general purpose application such as a web browser is used to access the chatbot hosted on the computing environment 200.

The user devices 210, 220, 230 are configured to receive inputs from their respective users and to transmit those inputs via the communication network 205 to the computing environment 200. The user inputs may be written textual inputs and/or vocal (spoken) inputs. If the user inputs are vocal inputs, the user devices 210, 220, 230 may be configured to convert the inputs into textual inputs before transmitting the inputs to the computing environment 200 via the communication network 205. The user devices 210, 220, 230 are also configured to receive responses from the computing environment 200 via the communication network 205.

Computing environment 200 may be owned and maintained by a third party, i.e. a party that is not the user of the one or more user devices 210, 220, 230. Examples of third-party computing environments include Amazon Web Services (AWS), Microsoft Azure, Google Cloud Platform, and IBM Cloud. By connecting to a multitude of user devices 210, 220, 230, and therefore users, computing environment 200 is able to benefit from economies of scale, thereby making processing and storing large quantities of data in computing environment 200 efficient.

Computing environment 200 may host computer code for the chatbot and for performing various processing which is executed in the computing environment 200, typically in response to a request from a user device 210, 220, 230. The computer code may include executable and/or source code, depending on the implementation language. Execution of the computer code causes the processing to be performed, and the output data produced by executing the computer code is available for the user to access. In this way, the computer resources required for performing processing are outsourced from the user device 210, 220, 230 to computing environment 200. This is advantageous because it means that the user does not have to provision and maintain their own physical computer hardware capable of performing the processing tasks associated with a chatbot. Moreover, the user can send the request from anywhere, as long as they have connection to computing environment 200 via communication network 205. Since the communication network 205 is typically the Internet, which is ubiquitous, the accessibility of computing environment 205 to the user is extremely high. This is convenient as the user does not have to be physically present at a particular location in order to access computing environment 200.

### Overview of network

The methods of the invention relate to methods for adapting a network 400. The network 400 is different to and distinct from the communication network 205.

In a first example, the network 400 may underpin the operation of a chatbot. In this example, a user may have a request. In search of a resolution to their request, the user may have a conversation with a chatbot, in which the user provides a series of inputs and the chatbot provides a series of responses. The responses of the chatbot correspond to nodes of a network, to which a user is assigned based on their inputs. In this way, during the conversation, the user moves through the network via a path across the nodes. The conversation may end upon reaching a target node, in which case the chatbot has successfully performed an action to deal with the user request. Alternatively, the conversation may fail to reach a target node, in which case the chatbot is unable to respond to one of the user inputs.

In a second example, the network 400 may include a series of nodes that each represent different partitions of data within a database. In response to a user input, which could be a search criterion, the network 400 assigns the user to one of the nodes of the network and returns the set of data corresponding to the assigned node, which is the set of data deemed to satisfy the search parameter. The network 400 may allow the user to perform further processing or searching of the data that are returned by the initial user input. The search may end when the user reaches a target node corresponding to a dataset of appropriate size.

In some embodiments, the network 400 may be one of a plurality of networks 400. The plurality of networks 400 may be 30 or more in number (for example, 34). Each network 400 may correspond to a particular subject and/or particular type of specific action, as will be described in further detail below. The plurality of networks 400 may be part of a global network comprising the plurality of networks 400 and an additional knowledge pool of nodes 402 and identifiers 404.

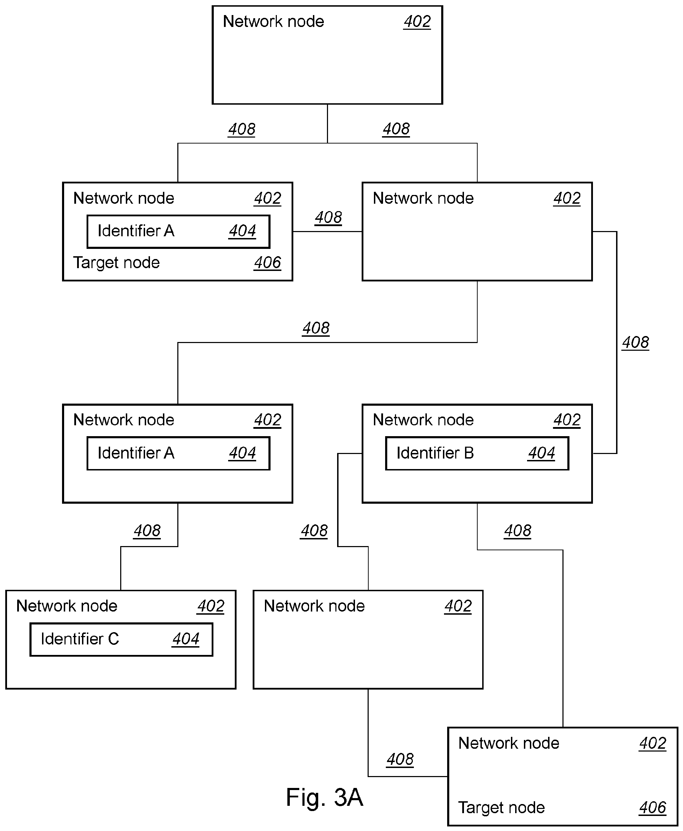

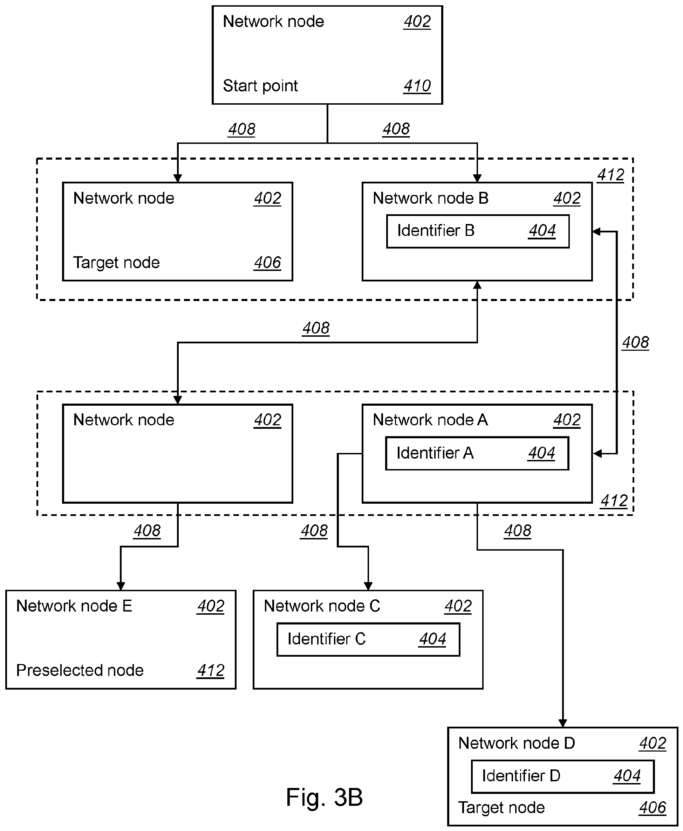

A first example of the network 400 is shown in Fig. 3A, and a second example of the network 400 is shown in Fig. 3B. The network 400 comprises a plurality of network nodes 402. Nodes 402 are connected via network connections 408. A pair of nodes 402, one of which may be reached from the other by crossing one network connection 408, are said to be directly connected to each other. Optionally, the connections 408 may be directional, some examples of which are shown in Fig. 3B. If a connection 408 is directional, a user may only pass along that connection 408 in a certain direction, as will be explained below. The nodes 402 may be directly connected to one other node, or to more than one other node 402. Each node 402 need not be connected to every other node 402. Optionally, the nodes 402 may be grouped into levels 412 within which no connections 408 are present. An example of this is shown in Fig. 3B, in which two exemplary horizontal levels 412 are indicated, and in which there are no connections 408 within the horizontal levels 412. Optionally, the connections 408 may be directional and may be arranged such that each level 412 can be visited no more than once.

The network further comprises at least one identifier 404. Each identifier 404 of the network is associated with one (or more) of the nodes 402. An identifier 404 is an object whose properties enable any associated node to be distinguished from other nodes associated with different identifiers, and also allow the nodes to be referenced. For example, as shown in Fig. 3A, an identifier 404 (shown as identifier A 404) may be associated with two of the nodes 402. Alternatively, as shown in Fig. 3B, each identifier may be associated with only one of the nodes 402. Each node 402 may be associated with one or more identifiers 404. Optionally, the identifiers may comprise text.

The network 400 is configured to allow a user to move through the network 400 via a path. Optionally, the network 400 may include a node 402 that is a start point 410, as shown in Fig. 3B. If the network 400 includes a start point 410, the path begins at the start point 410.

If the network 400 is one of a plurality of networks 400, then each network 400 of the plurality of networks 400 may share a common start point 410.

The path is a series of nodes 402 with which the user is associated. The nodes 402 comprised in the path are selected using the following process. At a point in time during an interaction between the user and the network 400, the user is associated with a particular node 402. Whilst associated with the particular node 402, the user provides one or more inputs. The user inputs may be provided using the user devices 210, 220, 230 and/or via the input devices, as discussed above. Also as mentioned above, the user inputs may be textual and/or vocal. The next node 402 with which the user will be associated is selected by comparing the user inputs with data pertaining to the identifiers 404 of the nodes 402 that are directly connected to the particular node 402.

For example, the user may be associated with a first node 402, such as node A 402 shown in Fig. 3B. Node A 402 is directly connected to three other nodes 402, termed node B 402, node C 402, and node D 402. When associated with node A 402, the user may provide one or more input(s). In this example, node A 402 is directly connected to node B 402, node C 402 and node D 402. To select the node 402 to which the user is assigned, the input(s) made whilst associated with node A 402 may be compared with data pertaining to the identifiers 404 of those nodes 402 to which node A 402 is directly connected (via connections 408 of the correct direction if the connections 408 are directional). In this example, the input(s) is compared with data pertaining to each of identifier B 404, identifier C 404 and identifier D 404.

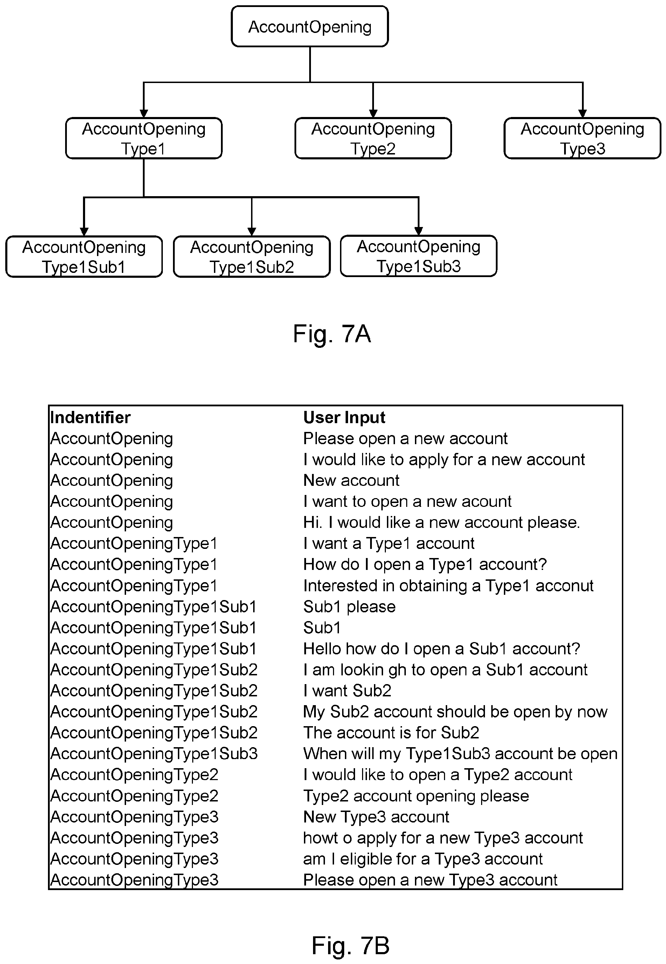

As used herein, the "data pertaining to an identifier" represents one or more prior user inputs corresponding to the identifier (and thus the corresponding node) or any data derived therefrom. Such prior user inputs may be stored with their corresponding identifier, for example in a table or database format, as depicted in Fig. 7B. The data pertaining to an identifier may also comprise one or more prior user inputs that are known to not correspond to that identifier (and thus the corresponding node) or any data derived therefrom. In any event, the prior user inputs may be obtained from previous users of a network or may be dummy or test user inputs for the network.

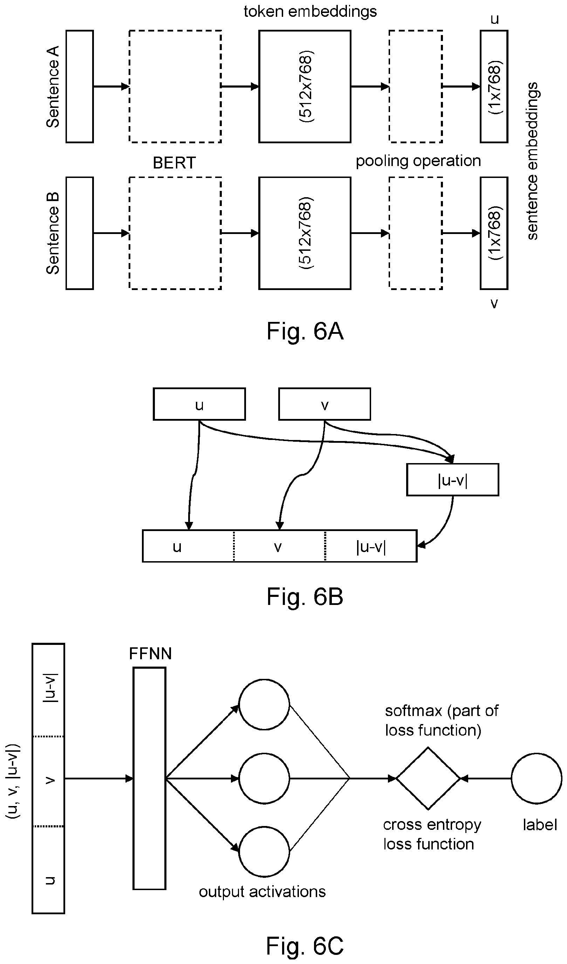

The comparison between the user inputs and data pertaining to the identifiers 404 may be performed using a trained model. The trained model may be a Bidirectional Encoder Representations from Transformers (BERT) model and/or a feed-forward neural network (FFNN). A detailed example of a trained model for use with the invention and how it performs the comparison is discussed with respect to Fig. 6A to Fig. 6C. Data preparation and subsequent use of the trained model in Fig. 6A to Fig. 6C is then explained at Fig. 7A and Fig. 7B.

Prior to being used by the trained model, the data pertaining to the identifiers (also known herein as "training" data) is prepared. The preparation may involve receiving one or more prior user inputs and manually assigning each prior user input to an identifier 404 to generate data pertaining to an identifier (as shown by the example at Fig. 7B). The resulting "training" data may comprise one or more prior user inputs that have each been assigned to a particular identifier 404. The preparation may further comprise transforming the "training" data to derive further data such as a set of numerical values representing a vector (also referred to herein as a sentence embedding). Such derived data may be stored alongside the identifiers, in a table format or otherwise.

In use, the trained model may pair the user input with data pertaining to each of the relevant identifiers 404, and perform the comparison in a pairwise fashion. Optionally, the comparison may involve performing text vectorisation in which the user input and data pertaining to the relevant identifiers are each converted into a set of numerical values, which are representative of a vector that is specific to each user input and each identifier (the set of numerical values is an example of the data derived from one or more prior user inputs corresponding to the identifier). The vector may be representative of a determined meaning of the corresponding user input/identifier. The comparison of a user input and data pertaining to an identifier may therefore correspond to a determined similarity of the user input and the data pertaining to the identifier.

The trained model may assign a similarity parameter to each pair based on the comparison. The similarity parameter is so called because it is indicative of the similarity between the user input and the data pertaining to the identifier 404 within each pair. In the case where the comparison performs text vectorisation, the similarity parameter may be calculated using cosine similarity, in which the parameter is based on the cosine of the angle between the two vectors in the pair. The node 402 to which the user is assigned may be selected because the similarity parameter of the data pertaining to the identifier 404 of that node 402 exceeds a predefined similarity threshold. For example, the similarity threshold may be defined such that if a similarity parameter exceeds a similarity threshold, the model has a certain confidence (e.g. a sufficient confidence) that the user's input has been correctly matched with a node and its corresponding identifier such that the user's intention has been determined and dealt with accurately. The similarity threshold may be manually selected by a user based on trial and error to give the highest likelihood of the given set of user inputs leading to a target node 406. For instance, for certain nodes 402, the similarity threshold may be set to at least 0.7 (70% similar), 0.8 (80% similar), or 0.9 (90% similar). In other instances, depending on the nature of the node 402, the similarity threshold may be set higher, such as 0.95 (95% similar) or 0.99 (99% similar).

If the network 400 is one of a plurality of networks 400, and if none of the similarity parameters of the data pertaining to the identifiers 404 of the network 400 exceeds the predefined similarity threshold, the user input may be compared with the data pertaining to the identifiers 404 of the nodes 402 of the other networks 400 of the plurality of networks 400. If the similarity parameter between the user input and data pertaining to an identifier 404 of a node 402 of another network 400 of the plurality of networks 400 exceeds the predefined similarity threshold, the user may be associated with that node 402. In other words, the user may transfer to a different network 400 of the plurality of networks 400.

Alternatively, or additionally, the node 402 to which the user is assigned may be selected because the similarity parameter of the data pertaining to the identifier 404 of that node 402 is higher than the other similarity parameters. For example, this may be useful when the model is not sufficiently confident that it has determined the intent of the user correctly, but it has determined that the user's input is more likely to correspond to one of the nodes than to the others.

As another example, when performing the comparison, the model may treat nodes 402 that are further from the start point 410 than the current node 402 differently to those that are closer to the start point 410 than the current node 402. For example, the current node 402 may be network node A 402 as shown in Fig. 3B. The model may first compare a given user input with the data pertaining to respective identifiers of the two nodes 402 (network node C 402 and network node D 402) that are connected to network node A 402 and are further from the start point 410 than network node A 402. The comparison may be performed using any of the comparison methods described above. If the comparison does not yield a similarity parameter exceeding the similarity threshold for either of network node C 402 or network node D 402, and/or the respective similarity parameters for network node C 402 and network node D 402 are similar in value, the user may not be assigned to either of network node C 402 and network node D 402. In this scenario, the user may then be assigned to the node 402 with which they were associated immediately before being associated with the current node 402. In this example, the user may return to network node B 402 and in so doing, they move closer to the start point 410. This may be because the assignment of the user to network node A 402 was incorrect and/or erroneous, since the user inputs failed to match with any of the nodes 402 that can be reached by passing across network node A 402.

Regardless of how the comparison is performed, a user is assigned to the node 402 that is selected based on the comparison. Once assigned, the comparison and assignment process is repeated, unless the user has been assigned to a node 402 from which no direct connections 408 of the correct direction are possible. Two examples of such nodes 402 are network node D 402 and network node E 402 as shown in Fig. 3B. Alternatively, the comparison and assignment process may be terminated if the user ceases to provide inputs, if the user does not provide an input within a specified duration of time, or if a connection (e.g. via the communication network 205) between the user and the host processor of the method (e.g. computing environment 200) is interrupted or broken.

In this way, the user moves through the network 400 along the path.

Once no further selection and assignment of the user is possible, the path is complete. The path is defined by the network nodes 402 with which the user was (at at least one point in time) associated. Accordingly, the path comprises a subset of the nodes 402 that are comprised in the network 400. In certain circumstances, it is possible for the subset of nodes 402 comprised in the path to comprise all of the nodes 402 comprised in the network.

At least one of the nodes 402 is a target node 406. In both Fig. 3A and Fig. 3B, two of the depicted nodes 402 are target nodes 406. The target nodes 406 may be directly connected via network connections 408 to more than one other node 402, as shown in Fig. 3A. Alternatively, as shown in Fig. 3B, the target nodes 406 may be directly connected via a single network connection 408 to a single other node 402. The target node 406 is so called because it may indicate that the path taken by the user through the network 400 was successful.

Upon reaching a target node 406, a specific action may be performed corresponding to the particular target node 406 that was reached. In the example where the network 400 underpins the operation of a chatbot, reaching a target node 406 may prompt the chatbot to perform a corresponding specific action. For example, the chatbot may be a personal assistant, reaching the target node 406 may indicate that the user wants to purchase an item from an online shop, and the specific action taken by the chatbot may be to purchase the item. As another example, the chatbot may be a healthcare assistant, reaching the target node 406 may indicate that the user has been diagnosed with an illness by the chatbot, and the specific action may be that the chatbot generates a prescription for medication required to treat the illness and sends the prescription to a doctor for approval. As a third example, the chatbot may assist customers of a financial organisation. Reaching the target node 406 may indicate that the customer wants to close an account. The specific action taken by the chatbot may be to close the account for the customer. In general, the nature of the specific action taken by the chatbot upon reaching a target node is beyond the scope of this disclosure. This disclosure focuses on if and how the chatbot reaches the target node.

The identifier 404 of a particular target node 406 may comprise a text string indicative of the specific action to be taken if the user reaches that target node 406. To continue the examples of specific actions introduced above, if the specific action is purchase of an item, then the identifier 404 associated with the target node 406 giving rise to that specific action may be "*ItemPurchase*". Similarly, if the specific action is generating a prescription then the identifier 404 associated with the target node 406 giving rise to that specific action may be "*PrescriptionGenerate*". If the specific action is closing an account, then the identifier 404 of the target node 406 giving rise to that specific action may be "*AccountClose*".

At least one of the nodes 402 may be a preselected node 412, as shown in Fig. 3B. The significance of the preselected node 412 is discussed in more detail below.

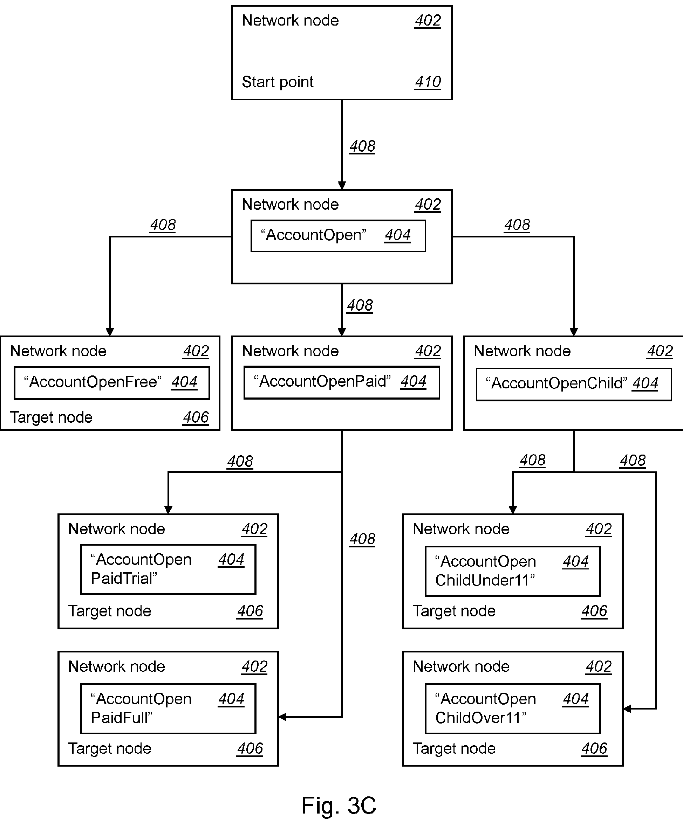

An example embodiment of the network 400 is shown in Fig. 3C. This example relates to opening a new account. As can be seen, from the start point 410, the network 400 includes a single network connection 408 to a node 402 whose identifier 404 is "*AccountOpen*". The network 400 may be one of a plurality of networks, in which the start point 410 is connected to the other networks 400 of the plurality of networks 400. In this example, another network 400 that may be part of a plurality of networks 400 may relate to closing an account (not shown). Accordingly, that network 400 may be connected to the start point 410 at a node 400 whose identifier 404 is "*AccountClose*".

In the example of Fig. 3C, there are several types of account that may be opened. The types shown are "Free", "Paid", and "Child". Both "Paid" and "Child" include two sub-types each, as shown. Hence, neither "*AccountOpenPaid*" nor "*AccountOpenChild*" is a target node 406.

To move through the network 400, a user may give an input such as "I would like to open a child account". Based on that input, the user currently associated with the "*AccountOpen*" node 402 would be associated with the "*AccountOpenChild*" node 402. Their next input may be "the child is aged 15". Based on that input, the user would then be associated with the *"AccountOpenChildOver11"* node 402.

Each of the nodes 402 that give rise to a specific action are indicated as target nodes 406. In this example, the target nodes are "*AccountOpenFree*", "*AccountOpenPaidTrial*", *"AccountOpenPaidFull", "AccountOpenChildUnder11",* and "*AccountOpenChildOver11*". Their respective specific actions may be opening a free account, opening a trial paid account, opening a full paid account, opening an account for a child aged under 11, and opening an account for a child aged over 11.

The example of Fig. 3C is merely an example of the type of specific action and identifier 404 that may be associated with the network 400. Other types of specific action and identifier 404 are possible.

### Overview of the method

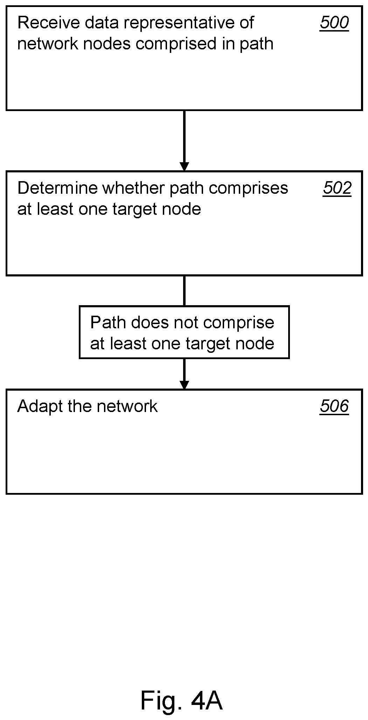

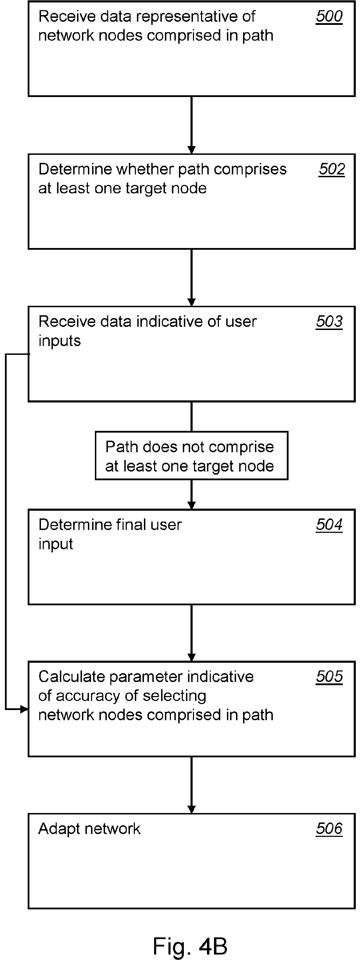

The methods of the invention consist of methods for adapting the network 400 described above. A first example of the method of the invention is shown in Fig. 4A. A second example of the method of the invention is shown in Fig. 4B.

First, at step 500, the method comprises receiving data representative of network nodes 402 comprised in a path taken by a user through the network 400. Optionally, at step 503, the method may also comprise receiving data indicative of the user inputs that gave rise to the path, as shown in Fig. 4B. These data are of interest because they enable the behaviour of the network, and specifically how the user inputs influence the path, to be analysed. The results of this analysis can then be used to modify the behaviour of the network, as will be explained in more detail below.

### Determining whether to adapt the network

Next, at step 502, the method comprises determining whether the path comprises at least one target node 406. This determination is useful because the target node 406 can be an indication of whether the path was successful. Optionally, if the method comprises receiving data indicative of the user inputs at step 503, and if it is determined that the path does not comprise at least one target node 406, the method may also comprise determining a final user input based on the data indicative of the user inputs, at step 504 as shown in Fig. 4B. In other words, the method may comprise determining which of the user inputs is the final user input. This can be of interest because the final user input can be the one that led the user to deviate from a route that may otherwise have led them to a target node 406.

Optionally, regardless of whether one or more target nodes 406 are comprised in the path, the method may also comprise calculating an accuracy parameter at step 505. The accuracy parameter indicates how accurately the nodes 402 comprised in the path were selected. This calculation may be based on the user's inputs and the data pertaining to the identifiers of the nodes 402 in the path. Alternatively or additionally, the calculation may be based on the similarity parameters returned by the trained model during the selection of nodes 402 comprised in the path.

If the path does not comprise at least one target node 406, the method comprises adapting the network 400 at step 506. This is because the path not comprising at least one target node 406 indicates that the path was unsuccessful. In other words, the path not comprising the target node 406 may be a sign that the user's inputs were not handled correctly and/or that their intention was not correctly determined and/or dealt with. Hence, the path not comprising at least one target node 406 may indicate that the network 400 needs to be adapted in order to improve its performance and to reduce the likelihood of another path leading to an unsuccessful outcome. The adaptation of the network 400 may be based on one or more of the data indicative of nodes 402 comprised in the path, the data indicative of user inputs, the final user input, and the accuracy parameter indicative of the accuracy of the node 402 selection.

Even if the path comprises at least one target node 406, the method may optionally comprise adapting the network 400, at step 506 as shown in Fig. 4B. This may be useful because even though a user has reached a target node 406, their intent may nevertheless have been incorrectly determined or their inputs may have been incorrectly handled such that they may not have reached the correct target node 406.

There is another situation in which the method may involve adapting the network 400 at step 506. As mentioned above, the network 400 may comprise a preselected node 412, as shown in Fig. 3B. The method may further comprise calculating, based on data regarding more than one path taken by a user through the network 400, a rate at which the paths include the preselected node 412. The rate is indicative of the probability that a randomly chosen path from the paths includes the preselected node 412. If the probability exceeds a predefined probability, the method may comprise adapting the network 400. This option can be useful if the preselected node 412 corresponds to a case where the user input failed to match with any of the other available nodes 402, meaning that matching to the preselected node 412 indicates that the user input was not assigned accurately.

As another option, the method may comprise determining how many nodes 402 are comprised in the path and determining how many user inputs were made during the path. If it is determined that that the number of user inputs is greater than the number of nodes 402 comprised in the path, the method comprises adapting the network 400. The number of user inputs may exceed the number of nodes 402 if, for example, a user input was not successfully assigned to a node 402 and the user had to rephrase or otherwise modify their input. Hence, this scenario can indicate that the path was not successful. The method may further comprise calculating a ratio parameter based on the ratio of nodes 402 comprised in the path to user inputs. If the ratio parameter is less than a predefined ratio threshold, the method may further comprise adapting the network.

### Adapting the network

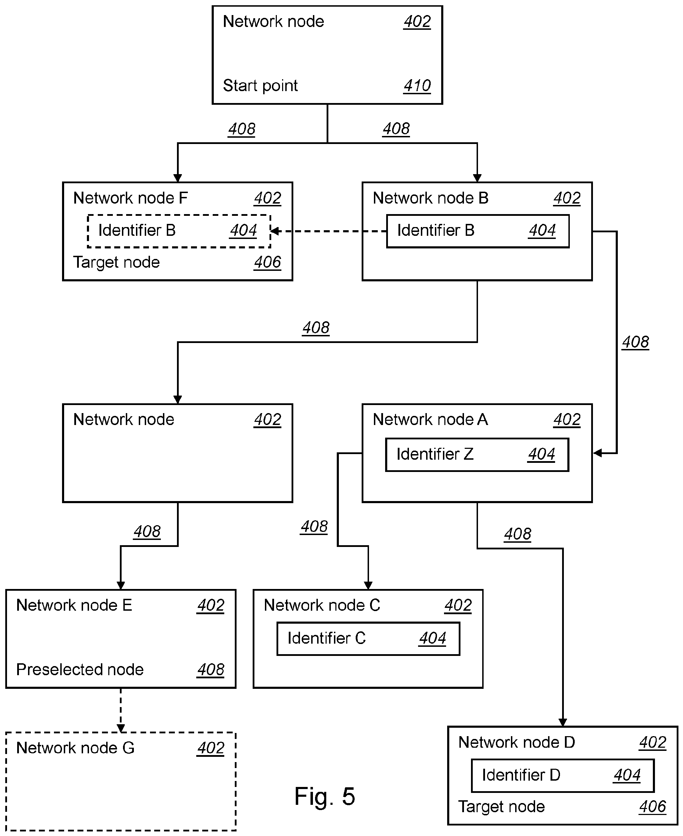

Fig. 5 depicts an example of the network 400 of Fig. 3B after the step 506 of adapting has been performed.

The following are example steps that adapting the network 400 may include.

Adapting the network 400 may comprise at least one of modifying one (or more) of the identifiers 404. This is shown in Fig. 5, in which the identifier 404 associated with network node A 402 has been modified from "Identifier A" (in Fig. 3B) to "Identifier Z" (in Fig. 5). This accordingly changes how a user input will be assigned to the node 402 whose identifier 404 has been changed, therefore modifying the path that will result from a given set of user inputs. The modified identifier 404 ("Identifier Z", in this example) may be one of the identifiers 404 already present in the network 400. Alternatively, the modified identifier 404 may be taken from a set of fallback identifiers 404 that are not currently in use in the network 400 and that are associated with a respective set of data pertaining to an identifier as described above. As another alternative, the modified identifier 404 may be taken from a further set of fallback identifiers 404 that are not currently in use in the network 400, but in another network in the plurality of networks and/or the global network.

Adapting the network 400 may comprise modifying the association between one (or more) of the identifiers 404 and one (or more) of the nodes 402. In the example of Fig. 5, identifier B 404 has been moved from network node B 402 to network node F 402. Similar to the previous case of modifying an identifier 404, modifying the association between an identifier 404 and a node 402 modifies the path that will result from a given set of user inputs.

Adapting the network 400 may include adding (or removing) one (or more) network nodes 402 to the network 400. In the example of Fig. 5, network node G 402 has been added. Altering the nodes 402 that are present in the network 400 modifies the paths that the user can take through the network 400, and may also modify the path that will result from a given set of user inputs. Nodes may be added from a different network in the plurality of networks and/or the global network.

Adapting the network 400 may include adding a network connection 408 between two nodes 402 that were not previously connected. For example, if a user is currently associated with a first network node 402 but their input is not sufficiently similar (determined using a comparison step as described above) to the data pertaining to the identifiers 404 of the nodes 402 to which the first network node 402 is directly connected, the user input may be compared against the data pertaining to the identifiers 404 of the nodes 402 in the network with which the first network node 402 is not directly connected. If data pertaining to one of these other identifiers 404 is sufficiently similar to the user input, a new network connection 408 may be made between the first network node 402 and the node 402 associated with that other identifier 404.

Adaptation of the network may be permanent or temporary. When adaptation is permanent, this means future users will use the adapted network. When adaptation is temporary, this may impact only the specific user navigating the network, or may impact all users accessing the network for a predefined time period.

### Testing the adapted network

Generally, it is desirable that the performance of the adapted network 400 (e.g. the one of Fig. 5) is improved relative to that of the original network 400 (e.g. the one of Fig. 3B). Therefore, the method may comprise optionally checking that the adaptation has indeed improved the performance of the network 400.

To perform the check, after the network 400 has been adapted, the method may optionally comprise generating an adapted path. The adapted path is generated by taking the user inputs that gave rise to the original path in the network 400 and applying those user inputs to the adapted network 400. As a result of the adaptation of the network 400, the adapted path may differ from the original path for the reasons explained above.

The method may then comprise determining whether the adapted path comprises at least one target node 406. The method may also include calculating an adapted accuracy parameter indicating how accurately the nodes 402 included in the adapted path were selected. The adapted accuracy parameter may be calculated in the same way as the accuracy parameter described above, except that the adapted accuracy parameter is based on the adapted path rather than the (original) path.

If the adapted path does not include a target node 406 and the (original) path did comprise a target node 406, the method may comprise reversing the adaptation. This is because, in that case, the adaptation has caused the network 400 to no longer generate a successful path (i.e. one that includes a target node 406), and in that sense the adaptation has made the network 400 less able to handle the particular set of user inputs under discussion. For that reason, it may be preferable to remove the adaptation.

If the adapted accuracy parameter is of indicative of lower accuracy than the accuracy parameter (i.e. if the adapted accuracy parameter indicates that the nodes 402 comprised in the adapted path were selected less accurately than the nodes 402 comprised in the path), the method may comprise reversing the adaptation. This is because, in that case, the adaptation has caused the network 400 to handle the user inputs less accurately than before, and in that sense the adaptation has made the network 400 less able to handle the particular set of user inputs under discussion. For that reason, it may be preferable to remove the adaptation.

Alternatively, in either of the above scenarios, the method may instead comprise adapting the network 400 (rather than reversing the adaptation). This is because, whilst both scenarios are in a sense indicative of worsened performance of the network 400, simply reversing any adaptation that apparently worsens performance may prevent the method from optimising the network 400 to the global optimum and instead may cause it to become trapped at a local optimum.

To enable the adaptation of the network 400 to be reversed, and/or as an additional safety/security feature, the previous versions of the network 400 may be stored. Optionally, the previous three versions of the network 400 may be stored.

### Trained model example

As discussed elsewhere herein, the comparison between the user inputs with the data pertaining to the identifiers may be performed using a trained model. A specific example of how the comparison is performed (i.e. Fig. 6A to Fig. 6C) is explained in this section. Data preparation and subsequent use of the trained model of Figs. 6A to 6C is then explained (i.e. Fig. 7A and Fig. 7B).

The model includes a sentence vectorisation model that is based on Bidirectional Encoder Representations Transformers (BERT) transformer architecture.

Fig. 6A provides an overview of how sentence embeddings (referred to as "sentences" in Fig. 6A) are created from (prior) user inputs via token embeddings. As shown in Fig. 6A, an SBERT (Sentence-BERT) model is applied to each (prior) user input, in this case two sentences, sentence A and sentence B. For each (prior) user input, the BERT model outputs token embeddings (consisting of 512 768-dimensional vectors). That data is then compressed into a single 768-dimensional sentence vector, representing a sentence embedding, using a pooling function. In Fig. 6A sentence embedding for sentence A is denoted u, whilst the sentence embedding for sentence B is denoted v.

Once the embedding of two user inputs, in this case sentence A and B, are determined, the cosine similarity of these embeddings is computed, as shown with respect to Fig. 6B. In particuarly, lu-vl is calculated to give the element-wise difference between the two vectors.

As shown by Fig. 6C, alongside the original two sentence embeddings (u and v), the cosine similarity is provided to a feed-forward neural network (FFNN) that has three outputs. These three outputs align to Natural Language Inference (NLI) similarity labels 0, 1, and 2. The softmax from the FFNN output is then calculated within the cross-entropy loss function. The softmax and labels are used to optimise on this `softmax-loss'. This results in pooled sentence embeddings for similar sentences (label 0) becoming more similar, and embeddings for dissimilar sentences (label 2) becoming less similar.

Significantly, because encoder-only BERT, and not decoder BERT, is being used, there are not two independent BERT models. Instead, a single BERT model processes sentence A followed by sentence B. This means that when the model weights are optimised, they are pushed in a direction that allows the model to output more similar vectors where there is an entailment label (i.e. 0) and more dissimilar vectors where there is a contradiction label (i.e. 2).

Data preparation and use of said trained model for a particular network thus involves the following steps:

### 1. Obtain or train a general sentence vectorisation model

As described above with respect to Figs. 6A to 6C, sentence vectorisation model may be based on Bidirectional Encoder Representations Transformers (BERT) transformer architecture. Such models and training are well known in the art.

### 2. Define the network and gather "training" data for each node of the network

An example network is shown in Fig. 7A. Each of the nodes in the network is given a corresponding identifier, as discussed elsewhere herein. For each of the nodes, corresponding prior user inputs are collected. These may be obtained from past interactions of users with the network or from dummy or test user inputs, or other means. Fig. 7B shows example user inputs collected for each of the nodes shown in Fig. 7A. As shown in Fig. 7B, example user inputs include ["Please open a new account", "Sub1 please", "Interested in obtaining a Type1 acconut"]. This "training" data is manually labelled by its relevance to each node, with relevant being represented as 2, not relevant being labelled as 0.

The number of prior user inputs collected for each node (and thus each identifier) ranges from at least 30 and can go up to 200 depending upon the complexity of topic that node represents. For example, a node that is representing `Decline transaction' in a 'Payments' topic can have more data than `Close Current account' node in `Close Account' topic because users have more varied ways of expressing an issue around declined transaction than closing a current account.

### 3. Create sentence embeddings from the "training" data

The process described with respect to Fig. 6A is performed for each of the "training" data. Thus, for example, ["Sub1 please"] becomes the sentence embedding [-5.07699139e-03 3.26871499e-02 7.52124796e-03 2.48752646e-02..............]. The sentence embeddings are stored alongside their corresponding identifier.

### 4. Receive a user input for the network

A user input, for example a sentence, is received from a user as discussed elsewhere herein. An example user input in the context of Fig. 7A and Fig. 7B is ["Open a Sub1 account."].

### 5. Convert the user input into into a sentence embedding

The process described with respect to Fig. 6A is performed for the user input. Accordingly, for the example, the user input gets convered to a sentence embedding. For instance, ["Open a Sub1 account."] becomes the sentence embedding [4.90445308e-02 1.07284794e-02 -4.89439853e-02 -4.35896106].

### 6. Compare the user input sentence embeddings with the sentence embeddings from the "training" data

The processes used in Fig. 6B and Fig. 6C are used to do this. Each of the sentence embeddings from the "training" data is compared against the user input sentence embedding in a pair-wise fashion. A similarity parameter gets assigned to each pair based on the comparison.

### 7. A node is selected based on the comparison

A node is selected in response to the user input if the similarity parameter of the pair (i.e. the "training" data of the node and the user input) exceeds a predefined similarity threshold, for example 0.95 (95% similar). The similarity thresholds are manually selected by a user based on trial and error to ensure that the user's input has been correctly matched with an identifier and its corresponding node such that the user's intention has been determined and dealt with accurately. Where multiple similarity parameters exceed the threshold, the identifier and corresponding node with the highest similarity parameter is selected. If no similarity parameters exceed the threshold, sentence embeddings in another network, such as the global network, are used.

The model discussed herein has been validated according to the following process.

In order to set up the validation, 7,000 sentences were converted into vector forms, these are the sentences which represented all of the paths and their respective nodes in the plurality of networks. All of the sentences were saved into a database as pre-saved vectors. Each sentence was saved with a corresponding vector, as well as a corresponding topic (to identify the appropripate network) and idenifier.

To perform the validation, 150 labelled test sentences (encompassing all the topics and encompassing all the possible networks) were curated for testing. Each sentence was tested on its cosine similarity, to the most similar sentence from pre-saved vectors above. These identified sentences were then manually checked to determine whether the sentences represented the same node. All 150 sentences passed evaluation.

### General

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for adapting a network, the network comprising a plurality of network nodes, at least one network connection, each network connection connecting two network nodes, and at least one identifier, wherein at least one of the network nodes is a target node, wherein each identifier is associated with at least one of the network nodes, wherein a path taken by a user through the network comprises at least one of the network nodes, wherein the network nodes comprised in the path are selected based on comparing at least one user input with data pertaining to the at least one identifier, the computer-implemented method comprising: receiving data representative of network nodes comprised in the path, determining, based on the data, whether the path comprises at least one target node, if the path does not comprise at least one target node, adapting the network.
2. The computer-implemented method of embodiment 1, wherein the path does not comprise at least one target node, the method further comprising: receiving data indicative of the user inputs, determining a final user input based on the data indicative of the user inputs, calculating an accuracy parameter indicative of an accuracy of the selecting the network nodes comprised in the path based on at least one of the data representative of network nodes comprised in the path and the data indicative of the user inputs, and adapting the network based on at least one of the receiving data representative of network nodes comprised in the path, the receiving data indicative of the user inputs, the determining a final user input, and the calculating.
3. The computer-implemented method of embodiment 1, wherein the path comprises at least one target node, the method further comprising: receiving data indicative of the user inputs, calculating an accuracy parameter indicative of an accuracy of the selecting the network nodes comprised in the path based on at least one of the data representative of network nodes comprises in the path and the data indicative of user inputs, and adapting the network based on at least one of the receiving data representative of network nodes comprised in the path, the receiving data indicative of user inputs, and the calculating.
4. The computer-implemented method of any preceding embodiment, wherein adapting the network comprises at least one of: modifying at least one of the at least one identifier, modifying the association between at least one of the at least one identifier and at least one of the network nodes, adding at least one network node to the network, removing at least one node from the network, adding at least one network connection to the network, and removing at least one network connection from the network.
5. The computer-implemented method of any preceding embodiment, wherein the network nodes are each assigned to one of at least one level, wherein network nodes within the same level are not directly connected to each other.
6. The computer-implemented method of any preceding embodiment, wherein the at least one network node that is a target node has a single network connection.
7. The computer-implemented method of any preceding embodiment, wherein the network nodes comprise a preselected node, the method further comprising: receiving data representative of network nodes comprised in at least two paths, determining a rate at which the at least two paths include the preselected node, and if the rate exceeds a predefined rate threshold, adapting the network.
8. The computer-implemented method of any preceding embodiment, further comprising: generating an adapted path based on applying the user inputs to the adapted network, determining whether the adapted path comprises at least one of the target nodes, if the adapted path does not comprise at least one of the target nodes and the path comprises at least one of the target nodes, either reversing the adaptation of the network, or adapting the network.
9. The computer-implemented method of any one of embodiments 2, 3, or any other preceding embodiment when dependent on embodiment 2 or embodiment 3, further comprising: generating an adapted path based on applying the user inputs to the adapted network, calculating an adapted accuracy parameter indicative of an accuracy of the selecting the network nodes comprised in the adapted path, comparing the adapted accuracy parameter to the accuracy parameter, if the adapted accuracy parameter is indicative of lower accuracy than the accuracy parameter, either reversing the adaptation of the network, or adapting the network.
10. The computer-implemented method of any preceding embodiment, wherein the comparing user input with data pertaining to the at least one identifier comprises applying a trained model to the user input and data pertaining to the at least one identifier.
11. The computer-implemented method of any preceding embodiment, wherein the at least one identifier comprises text and/or wherein the user inputs comprise text.
12. The computer-implemented method of embodiment 10, or embodiment 11 when dependent on embodiment 10, wherein selecting at least one of the network nodes comprised in the path based on the comparison of the user input and the data pertaining to the at least one identifier comprises determining a similarity parameter for at least one of the network nodes, the similarity parameter indicative of a similarity between the user input and the data pertaining to the identifier associated with the at least one network node.
13. The computer-implemented method of embodiment 12, further comprising selecting one of the network nodes based on the similarity parameter of the one of network nodes exceeding a predefined similarity threshold.
14. The computer-implemented method of embodiment 12 or embodiment 13, wherein determining the similarity parameter for at least one of the network nodes comprises determining the similarity parameter for each of at least two of the network nodes, the method further comprising selecting one of the network nodes based on the similarity parameter of the one of the network nodes being greater than the at least one similarity parameter of the at least one other of the network nodes.
15. The computer-implemented method of embodiment 10, embodiment 11 when dependent on embodiment 10, or any one of embodiments 12 to 14, wherein comparing the at least one user input with the data pertaining to at least one identifier comprises converting, with the trained model, each of the at least one user input and each of the at least one identifier into a set of numerical values.
16. The computer-implemented method of embodiment 15 when dependent on embodiment 12, wherein determining the similarity parameter for a pair of one user input and one identifier comprises calculating a cosine of an angle between a vector represented by the set of numerical values of the user input and a vector represented by the set of numerical values of the identifier.
17. The computer-implemented method of any preceding embodiment, further comprising: determining whether a final node in the path is a target node if the final node in the path is a target node, adapting the network.
18. The computer-implemented method of any preceding embodiment, wherein the network nodes comprised in the path are selected based on comparing at least one user input with the data pertaining to the at least one identifier and based on whether the network nodes are connected to any other network node in the path via one network connection.
19. The computer-implemented method of any preceding embodiment, wherein the network comprises a start point, wherein the start point is one of the network nodes, wherein the path comprises the start point.
20. The computer-implemented method of embodiment 17, wherein each network node that is not the start point comprises at least one identifier.
21. The computer-implemented method of any preceding embodiment, wherein each network node comprises at least one identifier.
22. The computer-implemented method of any preceding embodiment, wherein each identifier comprises text.
23. The computer-implemented method of any preceding embodiment, wherein the nodes comprised in the path are each comprised in the path once only.
24. The computer-implemented method of any preceding embodiment, wherein the network is AWS Lex.
25. The computer-implemented method of any preceding embodiment, further comprising: determining a number of nodes comprised in the path, determining a number of user inputs, further comprising at least one of: i. calculating a ratio parameter based on the ratio of the number of nodes comprised in the path to the number of user inputs, if the ratio parameter is less than a predefined ratio threshold, adapting the network, ii. determining whether the number of nodes comprised in the path is equivalent to the number of user inputs, if the number of user inputs is not equivalent to the number of nodes comprised in the path, adapting the network.
26. The computer-implemented method of any preceding embodiment, wherein the method is activated by a Jenkins pipeline.
27. The computer-implemented method of any one of embodiments 8, 9, or any other preceding embodiment when dependent on embodiment 8 or when dependent on embodiment 9, wherein: reversing the adaptation comprises reverting the adapted network to one of a plurality of stored versions of the network, optionally wherein the plurality of stored versions of the network comprises three stored versions of the network.
28. The computer-implemented method of embodiment 12 or of any other preceding embodiment when dependent on embodiment 12, wherein the calculating the accuracy parameter is based on the at least one similarity parameter.
29. The computer-implemented method of any preceding embodiment, wherein the network is one of a plurality of networks.
30. The computer-implemented method of embodiment 29, wherein the plurality of networks is part of a global network comprising the plurality of networks and additional nodes and identifiers.
31. The computer-implemented method of embodiment 29 or 30, wherein adapting the network comprises consulting another network of the plurality of networks, and optionally adding a network connection between the network and another network of the plurality of networks.
32. The computer-implemented method of any one of embodiments 29 to 31, wherein adapting the network comprises using the additional nodes and identifiers of the global network.
33. A computer program configured to carry out the method of any preceding embodiment.
34. A non-transitory computer readable medium comprising instructions that, when executed by a processor, cause the processor to implement the method of any preceding claim.

## Claims

1. A computer-implemented method for adapting a network, the network comprising a plurality of network nodes, at least one network connection, each network connection connecting two network nodes, and at least one identifier, wherein at least one of the network nodes is a target node, wherein each identifier is associated with at least one of the network nodes, wherein a path over the network connections taken by a user through the network comprises at least one of the network nodes, wherein the network nodes comprised in the path are selected based on comparing at least one user input with data pertaining to the at least one identifier,
the computer-implemented method comprising:
receiving data representative of network nodes comprised in the path,
determining, based on the data, whether the path comprises at least one target node,
if the path does not comprise at least one target node, adapting the network.

2. The computer-implemented method of claim 1, wherein the path does not comprise at least one target node, the method further comprising:
receiving data indicative of the user inputs,
determining a final user input based on the data indicative of the user inputs,
calculating an accuracy parameter indicative of an accuracy of the selecting the network nodes comprised in the path based on at least one of the data representative of network nodes comprised in the path and the data indicative of the user inputs, and
adapting the network based on at least one of the data representative of network nodes comprised in the path, the data indicative of the user inputs, the final user input, and the accuracy parameter.

3. The computer-implemented method of claim 1, wherein the path comprises at least one target node, the method further comprising:
receiving data indicative of the user inputs,
calculating an accuracy parameter indicative of an accuracy of the selecting the network nodes comprised in the path based on at least one of the data representative of network nodes comprised in the path and the data indicative of user inputs, and
adapting the network based on at least one of the data representative of network nodes comprised in the path, the data indicative of user inputs, and the accuracy parameter.

4. The computer-implemented method of any preceding claim, wherein adapting the network comprises at least one of:
modifying at least one of the at least one identifier,
modifying the association between at least one of the at least one identifier and at least one of the network nodes,
adding at least one network node to the network,
removing at least one node from the network,
adding at least one network connection to the network, and
removing at least one network connection from the network.

5. The computer-implemented method of any preceding claim, wherein the network nodes are each assigned to one of at least one level, wherein network nodes within the same level are not directly connected to each other.

6. The computer-implemented method of any preceding claim, wherein the at least one network node that is a target node has a single network connection.

7. The computer-implemented method of any preceding claim, wherein the network nodes comprise a preselected node, the method further comprising:
receiving data representative of network nodes comprised in at least two paths,
determining a rate at which the at least two paths include the preselected node, and
if the rate exceeds a predefined rate threshold, the method adapting the network.

8. The computer-implemented method of any preceding claim, further comprising:
generating an adapted path based on applying the user inputs to the adapted network,
determining whether the adapted path comprises at least one of the target nodes,
if the adapted path does not comprise at least one of the target nodes and the path comprises at least one of the target nodes, either
reversing the adaptation of the network, or
adapting the network.

9. The computer-implemented method of any one of claims 2, 3, or any other preceding claim when dependent on claim 2 or claim 3, further comprising:
generating an adapted path based on applying the user inputs to the adapted network,
calculating an adapted accuracy parameter indicative of an accuracy of the selecting the network nodes comprised in the adapted path,
comparing the adapted accuracy parameter to the accuracy parameter,
if the adapted accuracy parameter is indicative of lower accuracy
than the accuracy parameter, either
reversing the adaptation of the network, or
adapting the network.

10. The computer-implemented method of any preceding claim, wherein the comparing user input with data pertaining to the at least one identifier comprises applying a trained model to the user input and the data pertaining to the at least one identifier.

11. The computer-implemented method of claim 10, wherein selecting at least one of the network nodes comprised in the path based on the comparison of the user input and the data pertaining to at least one identifier comprises determininga similarity parameter for at least one of the network nodes, the similarity parameter indicative of a similarity between the user input and the data pertaining to the identifier associated with the at least one network node.

12. The computer-implemented method of claim 11, further comprising selecting one of the network nodes based on the similarity parameter of the one of network nodes exceeding a predefined similarity threshold.

13. The computer-implemented method of claim 11 or claim 12,
wherein determining the similarity parameter for at least one of the network nodes comprises determining the similarity parameter for each of at least two of the network nodes,
the method further comprising selecting one of the network nodes based on the similarity parameter of the one of the network nodes being greater than the at least one similarity parameter of the at least one other of the network nodes.

14. A computer program configured to carry out the method of any preceding claim.

15. A non-transitory computer readable medium comprising instructions that, when executed by a processor, cause the processor to implement the method of any preceding claim.
